# EUROPÄISCHE PATENTANMELDUNG

(11) **EP 1 022 669 A2**
(43) Veröffentlichungstag der Anmeldung: **26.07.2000**
(21) Anmeldenummer: 99122822.2
(22) Anmeldetag: 17.11.1999
(51) Int. Cl.: G06F 17/60

(54) **Verfahren zur Zuordnung von Immobilienanbietern zu Immobiliensuchenden**

(30) Priorität: 20.01.1999 DE 19901995; 06.03.1999 DE 19909901; 08.09.1999 DE 19942820
(71) Anmelder: Danielowski, Udo, 53894 Mechernich (DE)
(72) Erfinder: Danielowski, Udo, 53894 Mechernich (DE); Plötzer, Alfred, 53894 Mechernich (DE)
(74) Vertreter: Castell, Klaus, Dr.-Ing.

(57) **Zusammenfassung**

Die Angebote von Immobilienanbietern werden in einem Datenpool gesammelt und Immobiliensuchenden auf Anfrage zur Verfügung gestellt. Hierzu werden die Informationen der Anbieter mit deren Adresse in eine mit einem öffentlich zugänglichen Computernetzwerk verbundene Datenbank eingegeben und den Suchenden nach Einwilligung in eine Kostenbelastung eine Abfragezugangsberechtigung zur Verfügung gestellt, um zumindest auf einen Teil der Datenbank zuzugreifen.

## Beschreibung

Die Erfindung betrifft ein Verfahren zur Zuordnung von Immobilienanbietern zu Immobiliensuchenden, bei dem Informationen der Anbieter in einem Datenpool gesammelt werden und den Suchenden auf Anfrage zur Verfügung gestellt werden.

Um Immobilienanbieter und Immobiliensuchende zusammenzubringen, werden üblicherweise Inserate in Tageszeitungen geschaltet. Diese Inserate sind je nach Größe relativ teuer und sprechen nur diejenigen Interessenten an, die in diesen Zeitungen nach Immobilieninseraten suchen.

Eine weitere Möglichkeit ist das Einschalten eines Maklers, der sich um die Publikation des Angebots, die Vorauswahl der Interessenten und die Vertragsgestaltung kümmert. Der Makler bekommt bei Vertragsabschluß eine Provision oder eine Courtage, die entweder vom Immobilienanbieter oder vom Immobiliensuchenden oder von beiden gezahlt wird. Problematisch hierbei sind die oft sehr hohen Maklergebühren, die lange Verkaufs- oder Vermietabwicklung und die Bindung von Immobilienanbietern und Immobiliensuchern an einen speziellen Makler. Außerdem hat ein Makler immer nur eine begrenzte Auswahl an Miet- oder Kaufobjekten.

Der Erfindung liegt daher die Aufgabe zu Grunde, das eingangs genannte Verfahren so weiterzuentwickeln, daß mit relativ geringen Kosten eine große Auswahl an Objekten zur Verfügung gestellt werden kann.

Diese Aufgabe wird dadurch gelöst, daß die Informationen der Anbieter mit deren Adresse in eine mit einem öffentlich zugänglichen Computernetzwerk verbundende Datenbank eingegeben werden und den Suchenden nach Einwilligung in eine Kostenbelastung eine Abfragezugangsberechtigung, zu mindestens einem Teil der Datenbank zur Verfügung gestellt wird.

Makler sind stets darauf bedacht, die Adressen der Immobilienanbieter nur dann weiterzugeben, wenn ihre Courtage gesichert ist. Dies führt zu einem aufwendigen Informationsaustausch zwischen dem Makler und einerseits dem Immobilienanbieter und andererseits dem Immobiliensuchenden bis endlich - kurz vor Vertragsabschluß - die Parteien zusammengeführt werden.

Im Gegensatz hierzu ermöglicht das erfindungsgemäße Verfahren, die Anbieterinformationen mit der Anbieteradresse bekannt zu machen. Das öffentlich zugängliche Computernetzwerk erlaubt es jedem Netzwerkbeteiligten sich in die Datenbank einzuklinken, um Informationen abzufragen. Die Kosten des Netzwerkbetreibers werden dadurch gedeckt, daß eine Abfragezugangsberechtigung erst dann erteilt wird, wenn der Immobiliensuchende eine Einwilligung in eine Kostenbelastung abgegeben hat.

Das erfindungsgemäße Verfahren ermöglicht es somit auf einfache Art und Weise, den Informationssuchenden zuerst mit einer Kostenpauschale zu belasten. Anschließend kann der Informationssuchende frei in einer Datenbank blättern, um gemütlich zu Hause zu jeder Tages- und Nachtzeit sich mit dem Immobilienangebot vertraut zu machen. Über die Adresse des Immobilienanbieters kann der Immobiliensuchende sofort mit dem Immobilienanbieter Kontakt aufnehmen, um alles weitere zu besprechen.

Auch für den Immobilienanbieter erschließen sich neue Möglichkeiten, da er sein Angebot in verschiedene Datenbanken eintragen lassen kann. Anschließend entsteht ein direkter Kontakt mit dem Immobiliensuchenden, um Verkauf oder Vermietung möglichst schnell voranzutreiben. Sowie sich Anbieter und Nachfrager einig sind, kann das Angebot umgehend aus der Datenbank gestrichen werden, so daß es im öffentlich zugänglichen Computernetzwerk nicht mehr ansprechbar ist.

Dies erhöht für den Immobilienanbieter die Geschwindigkeit des Verkaufs oder der Vermietung und für den Immobiliensuchenden ergibt sich eine erhöhte Markttransparenz und die Möglichkeit der schnellen Abwicklung.

Der Betreiber der Datenbank kann weitere Maklerdienstleistungen beispielsweise mittels eines Links im Computernetzwerk anbieten oder auch persönlich sowohl dem Immobilienanbieter als auch dem Immobiliensuchenden zur Verfügung stehen. Der Arbeitsaufwand des Maklers kann jedoch auch auf ein Minimum reduziert werden.

Vorteilhaft ist es, wenn die Abfragezugangsberechtigung zeitlich begrenzt ist. Dies erlaubt es, nach Ablauf einer Zeitspanne eine neue Zugangsberechtigung gegen eine erneute Kostenbeteiligung zur Verfügung zu stellen. Die Kosten, die dem Immobiliensuchenden entstehen, sind somit individuell an dessen persönlichen Bedarf angepaßt und, sowie das Verfahren zum Ziel geführt hat, müssen keine weiteren Kosten mehr entstehen.

Um die Informationen des Immobilienanbieters für den Immobiliensuchenden aufzubereiten, wird vorgeschlagen, daß die Information der Anbieter sortiert werden. Dies erlaubt einen einfachen Zugriff und erleichtert den Überblick über das Marktangebot.

Das erfindungsgemäße Verfahren erlaubt es, verschiedenartigste Informationen anzubieten. Vorteilhaft ist es, wenn diese Informationen Bilder aufweisen. Insbesondere die Kombination mit Musik und Sprache erlaubt es das Angebot däquant herauszustellen.

Gerade die Vermittlung von Immobilien kann durch Bildmaterial besonders erleichtert werden. Diese Bilder sind vorzugsweise 3-dimensional und können auch in Form eines Filmes ablaufen, so daß der Informationssuchende schon am Bildschirm einen imaginären Spaziergang durch das angebotene Immobilienobjekt machen kann.

Die beim Einrichten des Verfahrens entstehenden Kosten können auch den Anbietern zugerechnet werden. Hierzu wird vorgeschlagen, daß dem Anbieter nach Einwilligung in eine Kostenbelastung eine Eingabezugangsberechtigung zu zumindest einem Teil der Datenbank zur Verfügung gestellt wird. Der Anbieter kann somit selbstätig vorgegebene Masken ausfüllen oder bestimmte Datenmengen in die Datenbank eingeben, um sein Angebot zu präsentieren.

Um die Vielzahl der Anfragen beim Anbieter zu reduzieren und um beispielsweise eine Vielzahl an Telefonanrufen beim Immobilienanbieter zu verhindern, wird vorgeschlagen, daß die Anbieteradresse als E-Mail Adresse in die Datenbank eingegeben wird. Dies erlaubt es, in einem elektronischen Briefkasten die Interessenten durchzusehen, ohne telefonisch gestört zu werden.

Eine spezielle Ausführungsform des Verfahrens sieht vor, daß die Anbieteradresse als Chiffrezeichen in die Datenbank eingegeben wird, dem Suchenden eine Eingabezugangsberechtigung zu einer Chiffredatenbank zur Verfügung gestellt wird, um seine Adresse zu einem Chiffrezeichen einzugeben, und dem Anbieter eine Abfragezugangsberechtigung zur Chiffredatenbank zur Verfügung gestellt wird, um zu seinem Chiffrezeichen die Adressen der Suchenden abzufragen. Dies erlaubt es, den Adressenaustausch zunächst auf das elektronische Medium zu beschränken, und ermöglicht es dem Immobilienanbieter, aus einer Vielzahl an Immobiliensuchenden diejenigen auszuwählen, die er ansprechen möchte.

Wegen der weltweiten Verbreitung wird als bevorzugtes Computernetzwerk das Internet empfohlen. Zwei Auführungsbeispiele des erfindungsgemäßen Verfahrens sind in der Zeichnung dargestellt und werden im folgenden näher erläutert. Es zeigt
- Figur 1: eine schematische Darstellung der Informationsströme bei Bekanntgabe der Adresse im Angebot des Anbieters,
- Figur 2: eine schematische Darstellung der Informationsströme bei Verwendung einer Chiffreadresse und
- Figur 3: ein Organigramm für einen beispielhaften Verfahrensablauf.

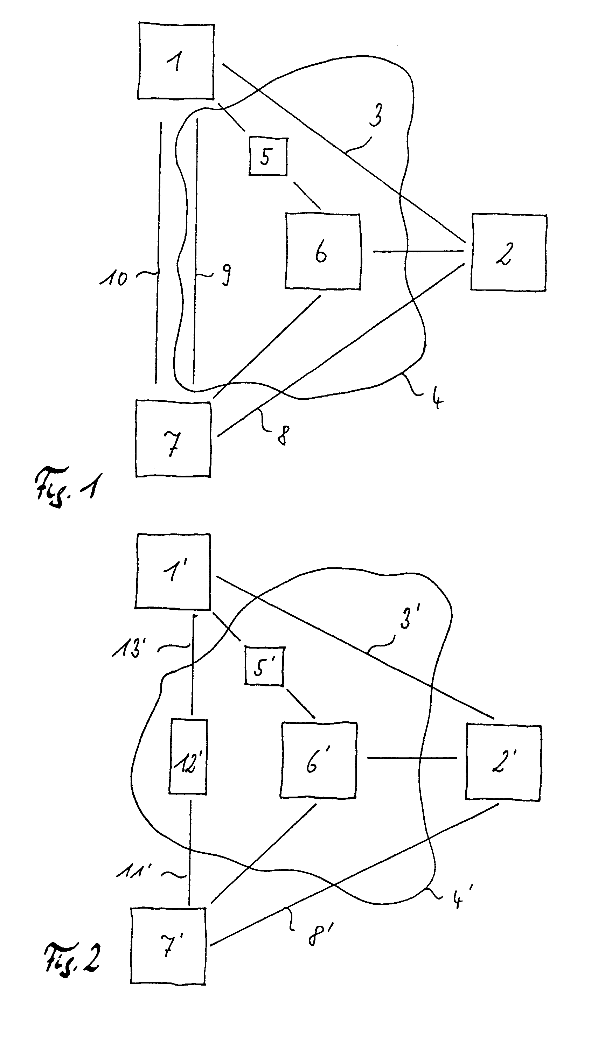

Bei dem in Figur 1 dargestellten Verfahren kauft der Anbieter 1 beim Makler 2 eine Eingabezugangsberechtigung 3, in dem er über das Netzwerk 4 mit dem Makler 2 in Verbindung tritt und in eine Kostenbelastung einwilligt, das heißt, einem Abbuchungsauftrag zustimmt. Der Makler 2 erschließt dem Anbieter 1 danach die Möglichkeit, sein Angebot 5 in einer Datenbank 6 zu plazieren. Dieses Angebot bleibt 6 Monate in der Datenbank und wird danach automatisch gelöscht, sofern keine neue Kostenbelastung vorliegt.

Ein Informationssuchender 7, der auf die Datenbank 6 zugreifen möchte erhält eine Abfragezugangsberechtigung 8 vom Makler 2, wenn er ebenfalls in eine Kostenbelastung einwilligt. Auch diese Abfragezugangsberechtigung ist auf ein halbes Jahr begrenzt. Nach Einwilligung in einen Abbuchungsauftrag kann der Informationsuchende frei jederzeit auf die Datenbank 6 zugreifen und das dort gespeicherte Immobilienangebot durchsehen. Sofern ihm ein Angebot zusagt, setzt sich der Immobiliensuchende entweder über das Netzwerk 4 beispielsweise über E-Mail 9 mit dem Anbieter 1 in Verbindung oder er nutzt das Telefonnetz 10, um mit dem Anbieter 1 die weiteren Modalitäten des Immobilienangebots zu besprechen und möglicherweise zu einem Vertragsabschluß zu kommen.

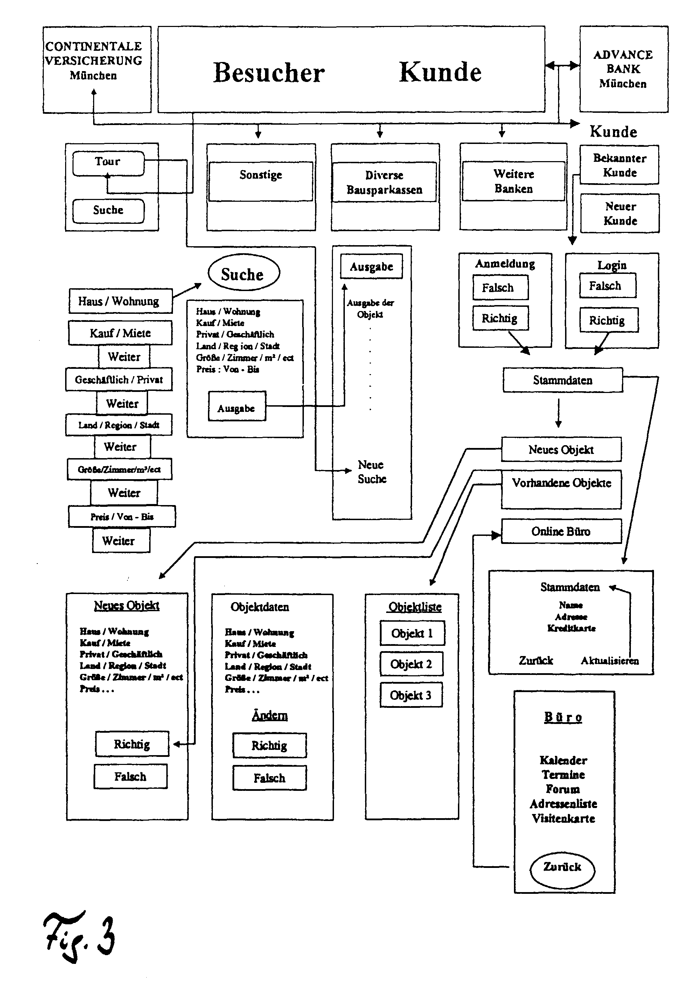

Die Figur 2 zeigt einen entsprechenden Aufbau, bei dem ebenfalls ein Anbieter 1' von einem Makler 2' eine Eingabezugangsberechtigung 3' erwirbt, um ein Angebot 5' mittels des Netzwerks 4' in einer Datenbank 6' zu positionieren. Der Suchende 7' erhält eine Abfragezugangsberechtigung 8' vom Makler 2', um sich ein Angebot 5' aus der Datenbank 6' auszusuchen. Da in der Datenbank 6' die Adresse des Anbieters nur als Chiffrezeichen angegeben ist, erhält der Suchende 7' eine weitere Zugangsberechtigung 11' zur Eingabe seiner Adresse in eine zweite Datenbank 12'. In der Datenbank 12' wird die Adresse des Suchenden 7' einem speziellen Angebot 5' und somit einem speziellen Anbieter 1' zugeordnet.

Auch der Anbieter 1' erhält neben seiner Eingabezugangsberechtigung 3' eine Abfragezugangsberechtigung 13', die es ihm erlaubt, von der zweiten Datenbank 12' die Adressen der Suchenden 7' abzufragen. Dem Anbieter 1' bleibt es somit überlassen, mit von ihm ausgewählten Suchenden 7' Kontakt aufzunehmen oder nicht.

Ein besonderer Service für die Anwender des erfindungsgemäßen Verfahrens wird dadurch erzielt, daß die Angebote in viele Sprachen übersetzt werden. Beispielsweise können sämtliche Angebote in 52 Sprachen präsent sein oder je nach Anbieterwunsch auch in weniger Sprachen. Ein bevorzugtes Ausführungsbeispiel sieht vor, daß jeweils im Land des Anbieters das Angebot in der entsprechenden Landessprache und Landeswährung ausgegeben wird. Alternativ kann jedoch auf der Seite des Mobiliensuchenden auch eine Abfrage vorgesehen werden, die es ermöglicht, sämtliche Angebote in einer speziellen Sprache und Währung zu erhalten.

Da in verschiedenen Staaten in verschiedenen Währungen gezahlt wird, sieht ein Finanzierungsmodul vor, daß die aktuellen Preise in den Landeswährungen ausgegeben werden und regelmäßig aktualisiert werden. Beispielsweise können über den aktuellen Kurs der Zinzen und der Landeswährungen alle 15 Minuten die Daten des Finanzierungsmoduls aktualisiert werden, um eine langfristige adäquate Finanzierung des Verfahrens zu gewährleisten. Eine Datenverbindung mit einer Bank oder der Börse ermöglicht eine einfache regelmäßige Aktualisierung der Währungsdaten.

Ein Übersetzungsmodul, das ebenfalls mit dem erfindungsgemäßen Verfahren zusammenwirkt, ermöglicht es spezielle Abkürzungen der landeseigenen Immobiliensprache in die entsprechenden Abkürzungen einer anderen Immobiliensprache zu übersetzen. Während in Deutschland beispielsweise eine Wohnung mit drei Zimmern, Küche und Bad als 3 ZKB abgekürzt wird, heißt die gleiche Abkürzung in Amerika 3 bedroom.

Darüber hinaus sieht das Verfahren vor, daß Interessenten die Immobilienanbieter oder Immobiliensucher Adressen des Pools zur Verfügung gestellt werden.

Das in Figur 3 gezeigte Organigramm zeigt ein Beispiel für den Aufbau eines Verfahrensablaufs und dient der Erweiterung des beschriebenen Verfahrens.

Die Ausführungen zeigen, daß das erfindungsgemäße Verfahren eine vorteilhafte Alternative zum bekannten Maklerwesen darstellt, die extrem effizient ist und somit sowohl dem Immobilienanbieter als auch dem Immobiliensuchenden sowie dem Immobilienmakler Vorteile bringt.

## Patentansprüche

1. Verfahren zur Zuordnung von Immobilienanbietern (1, 1') zu Immobiliensuchenden (7, 7'), bei dem Informationen (5, 5') der Anbieter (1, 1') in einem Datenpool (6, 6') gesammelt werden und den Suchenden (7, 7') auf Anfrage zur Verfügung gestellt werden, ***dadurch gekennzeichnet, daß*** die Informationen (5, 5') der Anbieter (1, 1') mit deren Adresse in eine mit einem öffentlich zugänglichen Computernetzwerk (4, 4') verbundene Datenbank (6, 6') eingegeben werden und den Suchenden (7, 7') nach Einwilligung in eine Kostenbelastung eine Abfragezugangsberechtigung (8, 8') zu zumindest einem Teil der Datenbank (6, 6') zur Verfügung gestellt wird.

2. Verfahren nach Anspruch 1, ***dadurch gekennzeichnet, daß*** die Abfragezugangsberechtigung (8, 8') zeitlich begrenzt ist.

3. Verfahren nach einem der vorhergenannten Ansprüche, ***dadurch gekennzeichnet, daß*** die Informationen (5, 5') der Anbieter (1, 1') sortiert werden.

4. Verfahren nach einem der vorgenannten Ansprüche, ***dadurch gekennzeichnet, daß*** die Informationen (5, 5') der Anbieter (1, 1') Bilder aufweisen.

5. Verfahren nach Anspruch 4, ***dadurch gekennzeichnet, daß*** die Bilder 3-dimensional sind.

6. Verfahren nach einem der vorhergehenden Ansprüche, ***dadurch gekennzeichnet, daß*** dem Anbieter (1, 1') nach Einwilligung in eine Kostenbelastung eine Eingabezugangsberechtigung (3, 3') zu zumindest einem Teil der Datenbank (6, 6') zur Verfügung gestellt wird.

7. Verfahren nach einem der vorhergehenden Ansprüche, ***dadurch gekennzeichnet, daß*** die Anbieteradresse als E-Mail-Adresse in die Datenbank (6, 6') eingegeben wird.

8. Verfahren nach einem der vorgehenden Ansprüche, ***dadurch gekennzeichnet, daß*** die Anbieteradresse als Chiffrezeichen in die Datenbank (6, 6') eingegeben wird, dem Suchenden (7, 7') eine Eingabezugangsberechtigung (11') zu einer Chiffredatenbank (12') zur Verfügung gestellt wird, um seine Adresse zu einem Chiffrezeichen einzugeben, und dem Anbieter (1') eine Abfragezugangsberechtigung (13') zur Chiffredatenbank (12') zur Verfügung gestellt wird, um zu seinem Chiffrezeichen die Adressen der Suchenden (7') abzufragen.

9. Verfahren nach einem der vorgehenden Ansprüche, ***dadurch gekennzeichnet, daß*** als Computernetzwerk (4, 4') das Internet genutzt wird.
